# EUROPÄISCHE PATENTANMELDUNG

(11) **EP 1 847 936 A1**
(43) Veröffentlichungstag der Anmeldung: **24.10.2007**
(21) Anmeldenummer: 06008210.4
(22) Anmeldetag: 20.04.2006
(51) Int. Cl.: G06F 17/30

(54) **Verfahren zur Auswahl eines Objekts mit einer Benutzerschnittstelle**

(71) Anmelder: Sqoops GmbH, 22761 Hamburg (DE)
(72) Erfinder: von Krogh, Wolfgang, 22391 Hamburg (DE); Erdmann, Felix, 20144 Hamburg (DE); Wünsch, Robert, 22607 Hamburg (DE)
(74) Vertreter: Hauck Patent- und Rechtsanwälte

(57) **Zusammenfassung**

Verfahren zur Auswahl eines Objekts aus einem Vorrat von Objekten, mit einer ein Eingabegerät und einen Bildschirm aufweisenden Benutzerschnittstelle, mit den folgenden Schritten:
• Vorgeben eines Werts für mindestens ein Vorauswahlkriterium,
• Bilden einer Teilmenge von Objekten aus dem Vorrat von Objekten nach Maßgabe des vorgegebenen Werts für das Vorauswahlkriterium,
• Darstellen von Objekten aus der Teilmenge auf dem Bildschirm und
• Auswählen eines dargestellten Objekts mit dem Eingabegerät,

dadurch gekennzeichnet, dass beim Darstellen der Objekte aus der Teilmenge einzelne dargestellte Objekte kontinuierlich hervor- und zurücktreten.

## Beschreibung

Die Erfindung bezieht sich auf ein Verfahren zur Auswahl eines Objekts aus einem Vorrat von Objekten, wobei die Objekte auf einem Bildschirm dargestellt und mit einem Eingabegerät ausgewählt werden. Die auswählbaren Objekte werden anhand eines Vorauswahlkriteriums vorselektiert und bilden eine Teilmenge aus dem Vorrat von Objekten.

Derartige Auswahlverfahren sind in einer Vielzahl von Ausgestaltungen bekannt. Sie finden überall dort Anwendung, wo ein Benutzer mit Hilfe eines Computers eine Auswahl aus einem großen Vorrat von Objekten treffen können soll. Beispiele sind Internet-Shops, bei denen der Benutzer beispielsweise aus einer Vielzahl von zum Verkauf stehenden Büchern auswählen kann, oder Internet-Suchmaschinen, die dem Benutzer eine anhand von Suchbegriffen zusammengestellte Vorauswahl von Internetseiten in Form einer Ergebnisliste anbietet, aus der der Benutzer eine Internetseite auswählt.

Bei dem bekannten Verfahren werden die Ergebnislisten, d.h. die anhand bestimmter Vorauswahlkriterien gebildeten Teilmengen, in Form einer Liste auf dem Bildschirm dargestellt. Die Liste enthält Objekte, beispielsweise Textzeilen, die einen bestimmten Gegenstand oder Inhalt repräsentieren. Diese Objekte werden zumeist statisch auf dem Bildschirm angezeigt. Häufig soll die Übersichtlichkeit der Listen dadurch verbessert werden, dass nur eine bestimmte Anzahl von Objekten auf einer Seite dargestellt wird und der Benutzer gegebenenfalls mehrere dieser Seiten durchblättern kann.

Ebenfalls bekannt ist eine Darstellung der auswählbaren Objekte in Form eines sich über die Bildschirmfläche bewegenden Laufbands. Dabei ist zu jedem Zeitpunkt nur eine bestimmte Anzahl von Objekten dargestellt, was die Übersichtlichkeit erhöht. Gleichzeitig kommt es zu einem automatischen Wechsel der zu einem bestimmten Zeitpunkt dargestellten Objekte. Jedes Objekt erscheint an einem Ende des Laufbands, durchläuft das Laufband und verschwindet am entgegengesetzten Ende des Laufbands wieder.

Davon ausgehend ist es die Aufgabe der Erfindung, ein Verfahren zur Auswahl eines Objekts mit einer Benutzerschnittstelle mit einem Bildschirm und einem Eingabegerät zur Verfügung zu stellen, das die Aufmerksamkeit eines Benutzers besser steuert, die Vielfalt der Objekte veranschaulicht, die Auswahl eines Objekts vereinfacht und für den Benutzer anregender gestaltet.

Diese Aufgabe wird gelöst durch das Verfahren mit den Merkmalen des Patentanspruchs 1. Vorteilhafte Ausgestaltungen sind in den Unteransprüchen angegeben.

Das Verfahren dient zur Auswahl eines Objekts aus einem Vorrat von Objekten, mit einer ein Eingabegerät und einen Bildschirm aufweisenden Benutzerschnittstelle, und weist die folgenden Schritte auf:
- Vorgeben eines Werts für mindestens ein Vorauswahlkriterium,
- Bilden einer Teilmenge von Objekten aus dem Vorrat von Objekten nach Maßgabe des vorgegebenen Werts für das Vorauswahlkriterium,
- Darstellen von Objekten aus der Teilmenge auf dem Bildschirm und
- Auswählen eines dargestellten Objekts mit dem Eingabegerät,
wobei beim Darstellen der Objekte aus der Teilmenge einzelne dargestellte Objekte kontinuierlich hervor- und zurücktreten.

Die Erfindung beruht auf der Erkenntnis, dass die bei den herkömmlichen Verfahren statische Darstellung der auswählbaren Objekte dem Benutzer eine große Konzentration abverlangt, um eine Liste von Objekten zu studieren. Auch ein herkömmliches Laufband bietet wenig Abwechslung und zwingt zu einer Betrachtung der auswählbaren Objekte in einer linearen Folge. Dadurch schweift die Aufmerksamkeit des Benutzers leicht ab und die Auswahl ist ermüdend und langweilig.

Im Gegensatz dazu führt das kontinuierliche Hervor- und Zurücktreten einzelner dargestellter Objekte aus der Teilmenge nach der Erfindung dazu, dass die Aufmerksamkeit des Benutzers gezielt auf ein gerade hervortretendes Objekt gelenkt wird. Durch das Hervortreten, das kontinuierlich und während einer gewissen Zeitspanne erfolgt, erscheint das Objekt besonders auffällig. Andere gerade zurücktretende oder zurückgetretene Objekte ziehen hingegen weniger Aufmerksamkeit auf sich. Sie bleiben dennoch zumindest während der Zeitspanne, in der sie kontinuierlich zurücktreten, sichtbar, sodass beim Benutzer der Eindruck einer großen Vielfalt an insgesamt auswählbaren Objekten verstärkt wird. Dieser Eindruck wird durch die durch das kontinuierliche Vor- und Zurücktreten entstehende, laufende Veränderung der Bildschirmdarstellung noch zusätzlich verstärkt.

Bei dem erfindungsgemäßen Verfahren sind in der Regel zu einem bestimmten Zeitpunkt einige dargestellte Objekte hervorgetreten und andere dargestellte Objekte zurückgetreten. Ferner ändert sich die Gruppe der zu einem Zeitpunkt hervorgetretenen Objekte fortwährend. Die Gruppe der zu einem Zeitpunkt zurückgetretenen Objekte ändert sich ebenfalls fortwährend. Es ist möglich, dass ein einzelnes Objekt im Laufe der Zeit wiederholt hervor- und zurücktritt. Es kann jedoch auch nach dem Zurücktreten durch ein anderes Objekt aus der Teilmenge ersetzt werden, welches in der Folge hervortritt. Mehrere Objekte können im gleichen Rhythmus oder unabhängig voneinander hervor- und zurücktreten.

Das Hervor- und Zurücktreten kann mit unterschiedlicher Geschwindigkeit erfolgen. Beispielsweise kann ein dargestelltes Objekt in einer relativ kurzen Zeitspanne hervortreten, beispielsweise innerhalb von zwei Sekunden, eine gewisse Zeit im hervorgetretenen Zustand verbleiben, beispielsweise für zehn Sekunden, und anschließend innerhalb einer dritten, längeren Zeitspanne von beispielsweise dreißig Sekunden wieder zurücktreten. Hervor- und Zurücktreten können auch mit der gleichen Geschwindigkeit erfolgen und gegebenenfalls ohne zwischengeschaltete Phase eines gleichmäßig hervorgetretenen Zustands unmittelbar ineinander übergehen.

Die Vorgabe eines Werts für ein Vorauswahlkriterium kann vom Benutzer aktiv getroffen werden, um die Teilmenge nach seinen Interessen zu bilden. Es ist jedoch auch möglich, einen Wert für ein Vorauswahlkriterium per Software ohne Interaktion des Benutzers vorzugeben. Insbesondere kann eine zuvor vom Benutzer festgelegte Präferenz hinsichtlich eines Vorauswahlkriteriums in der Software hinterlegt sein und nach Anmelden des Benutzers automatisch aktiviert werden.

Bei dem Eingabegerät handelt es sich beispielsweise um eine Computermaus oder eine Tastatur.

Gemäß einer bevorzugten Ausgestaltung der Erfindung sind die dargestellten Objekte Bilder, Symbole oder Piktogramme, die eine Kaufsache oder einen digitalen Inhalt, insbesondere ein digitales Medium, repräsentieren. Grundsätzlich können die dargestellten Objekte in beliebiger Form dargestellt werden. Die bevorzugt verwendeten Bilder, Symbole oder Piktogramme zeichnen sich durch eine leichte Erfaßbarkeit aus, die einer einfachen Textdarstellung überlegen sein kann. Jedes Objekt kann eine Kaufsache repräsentieren, d.h. die Auswahl des Objekts kann den Kauf eines durch das Objekt repräsentieren Gegenstands zur Folge haben oder vorbereiten, beispielsweise indem der Gegenstand in einen virtuellen Warenkorb gelegt wird. Es kann sich jedoch auch bevorzugt um einen digitalen Inhalt handeln, welcher nach Auswahl gegebenenfalls unmittelbar auf dem Bildschirm dargestellt oder wiedergegeben werden kann. Besonders geeignet ist das Verfahren auch zur Auswahl eines digitalen Mediums, beispielsweise einer DVD oder einer CD mit Musik, einem Film oder einem Computerspiel. Digitale Inhalte eignen sich zur Auswahl mit dem erfindungsgemäßen Verfahren deshalb besonders gut, weil sie insbesondere aufgrund der von dem digitalen Inhalt umfaßten Bilder einfach als Bild oder Symbol auf dem Bildschirm dargestellt werden können.

In einer weiteren bevorzugten Ausgestaltung der Erfindung werden hervorgetretene Objekte größer dargestellt als zurückgetretene Objekte. Folglich besteht das Hervor- und Zurücktreten in einer Änderung der Größe, in der das jeweilige Objekt dargestellt ist. Die sich während des Hervortretens vergrößernden Objekte ziehen in besonders effektiver Weise die Aufmerksamkeit eines Benutzers auf sich.

In einer weiteren Ausgestaltung der Erfindung werden hervorgetretene Objekte in anderen Farben und/oder anderer Helligkeit dargestellt, als zurückgetretene Objekte, insbesondere derart, dass hervorgetretene Objekte farbig und zurückgetretene Objekte schwarz/weiß dargestellt werden. Das Hervor- und Zurücktreten eines Objekts besteht somit in einer Änderung der Farbigkeit oder der Helligkeit des Objekts. Dadurch können hervorgetretene Objekte besonders auffällig gestaltet werden, während zurückgetretene Objekte insbesondere in einer Schwarz-/Weiß-Darstellung in den Hintergrund treten.

Gemäß einer weiteren Ausgestaltung der Erfindung sind die zurückgetretenen Objekte zeitweise nicht sichtbar. Grundsätzlich ist es auch möglich, dass auch die zurückgetretenen Objekte ständig sichtbar sind. Je nach Anzahl und Eigenart der dargestellten Objekte kann es jedoch vorteilhaft sein, die zurückgetretenen Objekte zeitweise nicht auf dem Bildschirm darzustellen. Dadurch kann die Übersichtlichkeit der Darstellung zugunsten der hervortretenden, zurücktretenden oder hervorgetretenen Objekte begünstigt werden.

Die Anordnung der dargestellten Objekte auf dem Bildschirm kann in Form einer auf einen Bereich des Bildschirms beschränkten Wolke erfolgen, in der die Objekte scheinbar zufällig verteilt sind. Durch den beschränkten Bildschirmbereich, der in diesem Fall zur Darstellung der Objekte genutzt wird, verbleibt ein Teil der Bildschirmfläche für sonstige Anwendungen. Die in Form einer Wolke scheinbar zufällig verteilten Objekte ergeben ein aufgelockertes, spielerisches Bild, das für den Benutzer besonders anregend ist.

In einer weiteren bevorzugten Ausgestaltung der Erfindung rotieren die dargestellten Objekte in einem Abstand um einen gedachten Mittelpunkt und werden als Projektion auf die Bildschirmfläche dargestellt, wobei weiter vom Betrachter entfernte Objekte kleiner als näher am Betrachter befindliche Objekte dargestellt werden. Die Darstellung der Objekte kann in einer Zentral- oder Fluchtpunktperspektive oder in einer sonstigen Art und Weise, die einen räumlichen Eindruck hervorruft, erfolgen. Durch die unterschiedlich große Darstellung der Objekte und die Rotationsbewegung um den gedachten Mittelpunkt kommt es zu einem automatischen Hervor- und Zurücktreten der einzelnen dargestellten Objekte. Die Projektion der Objekte auf die Bildschirmfläche wird von einem Computer berechnet. Durch die Rotationsbewegung wird weiter erreicht, dass ein einzelnes Objekt in einer für den Benutzer erkennbaren Abfolge hervor- und zurücktritt. Der Benutzer kann daher die Zeitspanne, während der ein bestimmtes Objekt vorteilhaft ausgewählt werden kann, abschätzen und rechtzeitig eine Entscheidung über eine Auswahl des Objekts treffen.

In einer weiteren bevorzugten Ausgestaltung der Erfindung erfolgt das Rotieren aller dargestellten Objekte mit der gleichen Winkelgeschwindigkeit. Grundsätzlich kann jedes Objekt eine eigene Winkelgeschwindigkeit, die auch mit der Zeit variieren kann, aufweisen. Bei unterschiedlichen Winkelgeschwindigkeiten erinnert das Kreisen der dargestellten Objekte um den gedachten Mittelpunkt an die Planeten eines Sonnensystems. Durch eine gleichmäßige Winkelgeschwindigkeit aller dargestellten Objekte entsteht hingegen ein insgesamt leichter nachvollziehbarer Bewegungsablauf. Dadurch kann die gezielte Auswahl erleichtert werden.

Die dargestellten Objekte können einen annähernd gleichen Abstand von dem gedachten Mittelpunkt aufweisen, sodass die Objekte auf einer Kugelfläche oder auf einer geometrisch verzerrten Kugelfläche angeordnet sind. Es entsteht dadurch der Eindruck einer rotierenden Kugel, die mit den hervor- und zurücktretenden Objekten versehen ist. Die Kugelfläche kann geometrisch verzerrt sein, das heißt, dass die Abstände der dargestellten Objekte von dem gedachten Mittelpunkt in Abhängigkeit von ihrer Winkellage bezogen auf ein ortsfestes Koordinatensystem variieren. Es wird dadurch eine besonders ansprechende Darstellung erreicht.

In einer weiteren Ausgestaltung der Erfindung bestimmt eine Eigenschaft eines Objekts die Darstellung des Objekts, insbesondere dessen Abstand von dem gedachten Mittelpunkt. Die die Darstellung bestimmende Eigenschaft kann beispielsweise ein Kaufpreis, eine Bewertung oder ein Verkaufsrang des Objekts sein. Dadurch können Objekte mit einer besonderen Ausprägung einer derartigen Eigenschaft gezielt in den Vordergrund gerückt werden, indem beispielsweise das in einer Vergrößerung des Objekts bestehende Hervortreten verstärkt wird. Diesen Effekt hat auch eine Vergrößerung des Abstands des Objekts von dem gedachten Mittelpunkt. Es wird dadurch eine weitere Steuerung der Aufmerksamkeit des Benutzers und eine damit einhergehende vereinfachte Auswahl erreicht.

Gemäß einer bevorzugten Ausgestaltung der Erfindung kann der Benutzer die Richtung und/oder die Geschwindigkeit der Bewegung der Objekte mit dem Eingabegerät beeinflussen. Es ist somit eine Interaktionsmöglichkeit für den Benutzer mit den dargestellten Objekten gegeben. Durch die Beeinflussung der Bewegung der Objekte kann der Benutzer dadurch die Teilmenge der dargestellten Objekte in besonders einfacher Weise durchsuchen, weniger interessante Objekte schneller zurücktreten oder ein bestimmtes besonders bevorzugtes Objekt zügig hervortreten lassen. Der Auswahlvorgang wird dadurch noch weiter vereinfacht.

In einer weiteren Ausgestaltung der Erfindung besteht das Vorgeben eines Vorauswahlkriteriums in der Wahl eines Genres, einer Altersfreigabe, eines Kaufpreises, einer Bewertung oder eines Erscheinungsdatums. Anhand der genannten Vorauswahlkriterien kann der Benutzer aus dem in der Regel sehr großen Vorrat von Objekten eine gezielte, seinen Bedürfnissen entsprechende Vorselektion bewirken. Der Auswahlvorgang wird dadurch abermals vereinfacht und effektiver gestaltet.

In einer weiteren bevorzugten Ausgestaltung der Erfindung ist vorgesehen, dass der Benutzer ein anzuwendendes Vorauswahlkriterium aus einer Liste mit vorgegebenen Vorauswahlkriterien auswählt. Der Benutzer legt somit die anzuwendenen Vorauswahlkriterien, für die er einen Wert vorgeben möchte, selbst fest. Bevorzugt erfolgt die Vorgabe eines Werts für ein Vorauswahlkriterium anhand eines kontinuierlich verstellbaren Reglers, der auf dem Bildschirm dargestellt ist, insbesondere anhand eines Schiebereglers oder eines Drehreglers. Ein derartiger Regler stellt eine besonders einfache, mit dem Eingabegerät bedienbare Einstellmöglichkeit dar. Ein Schiebe- oder Drehregler eignet sich dabei sowohl für eine stufenlose als auch für eine stufenweise Vorgabe eines bestimmten Werts. Insgesamt wird die Vorauswahl weiter vereinfacht.

Gemäß einer weiteren bevorzugten Ausgestaltung der Erfindung kann ein vorgegebener Wert für ein Vorauswahlkriterium von einem Benutzer fest vorgegeben werden und eine Verstellung des vorgegebenen Werts ist nur nach einer Authentifizierung des Benutzers möglich, insbesondere nach Eingabe eines Paßworts. Diese Ausgestaltung der Erfindung ist insbesondere für eine feste Vorgabe eines Werts für ein Vorauswahlkriterium durch eine Betreuungsperson geeignet, beispielsweise einer bestimmte Altersfreigabe oder eines maximalen Kaufpreises. Durch diesen von der Betreuungsperson fest vorgegebenen Wert für ein Vorauswahlkriterium kann ein weiterer Benutzer seine Auswahl nur innerhalb der durch das feste Vorauswahlkriterium festgelegten Teilmenge treffen. Es können auch Werte für mehrere oder alle Vorauswahlkriterien fest vorgegeben werden. Die Sperre kann nur durch die Betreuungsperson wieder aufgehoben werden. Es ist damit eine zweckmäßige und einfache Kindersicherung verwirklicht.

Gemäß einer Ausgestaltung der Erfindung wird das Bilden einer Teilmenge von Objekten aus dem Vorrat von Objekten und das Darstellen der Objekte aus der Teilmenge bei einer Veränderung der Vorauswahlkriterien dynamisch aktualisiert. Das heißt, dass eine Veränderung eines Vorauswahlkriteriums unmittelbar anhand der dargestellten Objekte sichtbar wird. Dem Benutzer werden dadurch zu jedem Zeitpunkt nur diejenigen Objekte angezeigt, die den gerade eingestellten Vorauswahlkriterien entsprechen. Weiter kann sich der Benutzer während der Verstellung eines Vorauswahlkriteriums einen Überblick über die Struktur der dargestellten Objekte bezüglich eines Vorauswahlkriteriums bilden. Besteht das Verändern des Vorauswahlkriteriums beispielsweise in der Vorgabe eines maximalen Kaufpreises, erhält der Benutzer durch die dynamische Aktualisierung der Darstellung einen schnellen Überblick darüber, welche Objekte oder welche Anzahlen von Objekten in bestimmten Preisbereichen liegen.

In einer weiteren Ausgestaltung der Erfindung ist vorgesehen, dass eine zweite Teilmenge von Objekten gebildet wird, wenn die Anzahl der Objekte aus dem Vorrat von Objekten, die die Vorauswahlkriterien erfüllen, eine bevorzugte Anzahl von Objekten für eine Teilmenge übersteigt, und dass die Objekte der zweiten Teilmenge gesondert von den Objekten der ersten Teilmenge dargestellt werden können. Eine bevorzugte Anzahl von Objekten für eine Teilmenge kann z.B. zwischen 5 und 100 Objekten betragen. Weiter bevorzugt sind Teilmengen mit einer Größe zwischen 10 und 60 Objekten, insbesondere zwischen 20 und 50 Objekten. Wenn die nach Maßgabe der Vorauswahlkriterien gebildete Teilmenge eine solche bevorzugte Anzahl von Objekten für eine Teilmenge übersteigt, wird eine zweite Teilmenge gebildet, gegebenenfalls auch eine dritte Teilmenge oder noch weitere Teilmengen. Jede der gebildeten Teilmengen kann gesondert von der ersten bzw. den übrigen weiteren Teilmengen dargestellt werden. Dadurch wird erreicht, dass die Anzahl der dargestellten Objekte auch dann einen für die Darstellung vorteilhaften Wert nicht übersteigt, wenn eine sehr große Anzahl von Objekten die Vorauswahlkriterien erfüllt. Insbesondere kann der Benutzer durch Auswählen einer der Teilmengen mit dem Eingabegerät die zu dieser Teilmenge gehörigen Objekte darstellen lassen. Der Auswahlvorgang wird dadurch auch bei einer sehr großen Anzahl von Objekten weiter strukturiert und vereinfacht.

Gemäß einer weiteren bevorzugten Ausgestaltung der Erfindung werden nach Bewegen eines mit dem Eingabegerät gesteuerten Zeigers auf ein dargestelltes Objekt oder in dessen Nähe Informationen zu dem dargestellten Objekt angezeigt. Dieser auch als "mouse over" bekannte Effekt stellt dem Benutzer gezielt weitere Informationen zu einzelnen Objekten zur Verfügung, bevor der Benutzer seine eigentliche Auswahl trifft.

In einer weiteren bevorzugten Ausgestaltung der Erfindung werden nach dem Auswählen eines dargestellten Objekts mit dem Eingabegerät Informationen zu dem Objekt dargestellt. Bevorzugt erfolgt die Darstellung der Informationen in der gleichen Form, wie die Darstellung der Objekte aus der Teilmenge, wobei die Informationen insbesondere Bilder sind, die an die Stelle der Objekte aus der Teilmenge treten. Bei dieser Ausgestaltung der Erfindung wird von der besonders anregenden Darstellungsweise der Objekte auch für die Darstellung zusätzlicher Informationen Gebrauch gemacht. Die Verfahrensabläufe sind dadurch für den Benutzer besonders konsistent und verständlich und wecken das Interesse des Benutzers.

Gemäß einer bevorzugten Ausgestaltung der Erfindung umfaßt die Darstellung der Informationen das Abspielen eines Videos. Insbesondere bei Verwendung des erfindungsgemäßen Verfahrens zur Auswahl eines digitalen Inhalts oder eines digitalen Mediums kann das Abspielen eines Videos die Auswahl für den Benutzer wesentlich erleichtern. Das Video kann beispielsweise ein Trailer zu einem auszuwählenden Film oder Computerspiel sein.

In einer weiteren Ausgestaltung der Erfindung ändert sich der Bildschirmhintergrund nach Maßgabe eines Vorauswahlkriteriums, insbesondere durch Darstellung kontextabhängiger Hintergrundbilder. Eine derartige Anpassung des Bildschirmhintergrunds veranschaulicht bereits getroffene Vorauswahlen und erleichtert dem Benutzer somit die Orientierung und die Auswahl eines bestimmten Objekts.

Nachfolgend wird die Erfindung anhand eines in zwei Figuren dargestellten Ausführungsbeispiels näher erläutert. Es zeigen:
- Fig. 1: eine Bildschirmdarstellung zur Durchführung des erfindungsgemäßen Verfahrens,
- Fig. 2: eine weitere Bildschirmdarstellung mit Zusatzinformationen zu einem vom Benutzer ausgewählten Objekt.

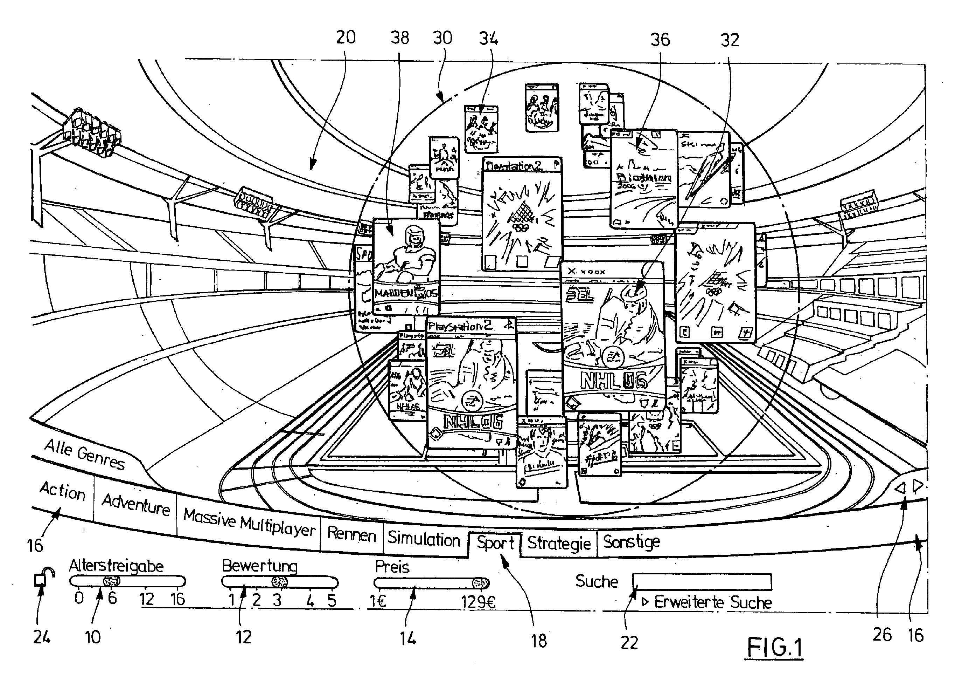

Im unteren Bereich des in Figur 1 dargestellten Bildschirmausschnitts befindet sich eine Reihe von Eingabemöglichkeiten, mit denen der Benutzer Werte für bestimmte Vorauswahlkriterien eingeben kann. Dazu zählen ein Schieberegler für eine Altersfreigabe 10, ein Schieberegler für eine Bewertung 12 und ein Schieberegler für einen maximalen Kaufpreis 14. Jeder der genannten Schieberegler umfaßt einen innerhalb eines den Schieberegler bildenden Balkens befindlichen Knopf, der die gerade gewählte Einstellung anzeigt und mit Hilfe des Eingabegeräts, das heißt vorzugsweise mit einer Computermaus, verschoben werden kann. Der Schieberegler für die Altersfreigabe kann mit der Maus schrittweise auf die Werte von 0, 6, 12 und 16 Jahren eingestellt werden. Bei einer Einstellung auf einen Wert von beispielsweise 12 Jahren werden beim Bilden der Teilmenge aus dem Vorrat von Objekten nur diejenigen Objekte vorausgewählt, die für Kinder ab 12 Jahren freigegeben sind.

Mit dem Schieberegler für eine Bewertung 12 können diejenigen Objekte aus dem Vorrat von Objekten vorausgewählt werden, die mindestens die eingestellte Bewertung, die in Stufen von einem bis zu fünf Sternen eingegeben werden kann, erhalten haben.

Der Schieberegler zur Vorgabe eines maximalen Kaufpreises 14 läßt sich in Schritten zwischen einem maximalen Preis von einem Euro und einem von 129 Euro verstellen. Entsprechend der Einstellung werden nur diejenigen Objekte aus dem Vorrat von Objekten in die Teilmenge aufgenommen, die nicht teurer als der gewählte Maximalpreis sind.

Eine weitere Möglichkeit zur Eingabe eines Vorauswahlkriteriums besteht durch Auswahl eines Genres mit Hilfe der in einem sich in einem Bogen über die gesamte Breite des Bildschirms erstreckenden Balken 16 angeordneten Auswahlfelder. Im dargestellten Beispiel wurde das Auswahlfeld 18, welches das Genre "Sport" bezeichnet, ausgewählt. Entsprechend wird die Teilmenge nur aus denjenigen Objekten gebildet, die diesem Genre angehören. Weitere in dem Balken 16 befindliche Auswahlfelder ermöglichen eine Auswahl der Genres "Action", "Adventure", "Massive Multiplayer", "Rennen", "Simulation", "Strategie" oder "Sonstige".

Durch die getroffene Auswahl des Genres "Sport" wird ein kontextabhängiges Hintergrundbild 20, im dargestellten Beispiel ein Sportstadion, dargestellt.

Eine weitere im unteren Bereich des Bildschirmausschnitts vorhandene Möglichkeit zur Wahl eines Vorauswahlkriteriums besteht in dem Texteingabefeld 22, in das bestimmte Suchbegriffe eingegeben werden können. Eine Möglichkeit zur Verriegelung der gewählten Vorauswahlkriterien besteht in der durch ein Vorhängeschloß 24 symbolisierten Sperre. Durch Klicken mit dem Eingabegerät auf das Vorhängeschloß 24 werden sämtliche Vorauswahlkriterien gesperrt. Die Sperre läßt sich nur durch Eingabe eines Paßworts wieder aufheben. Es ist auch möglich, dass die Sperre nur einige der Vorauswahlkriterien, beispielsweise die Altersfreigabe, blockiert, während weitere Vorauswahlkriterien für einen nachfolgenden Benutzer wählbar bleiben.

Sofern die nach Maßgabe der Vorauswahlkriterien gebildete Teilmenge mehr als 40 Objekte umfaßt, werden weitere Teilmengen gebildet. Mit Hilfe der durch zwei Dreiecke symbolisierten Teilmengenauswahlknöpfe 26 kann der Benutzer eine dieser Teilmengen für die Darstellung auf dem Bildschirm auswählen.

Im zentralen Bereich des Bildschirms befindet sich eine von der gestrichelten Linie 30 umschriebene Wolke mit auswählbaren Objekten. Die Wolke ist auf einen kreisförmigen Bereich konzentriert, dessen Durchmesser etwa zwei Fünftel der Bildschirmbreite beträgt. Innerhalb der Wolke sind die einzelnen Objekte scheinbar zufällig verteilt angeordnet. Jedes dargestellte Objekt ist ein Bild, das ein digitales Medium repräsentiert. Im dargestellten Beispiel handelt es sich bei den digitalen Medien um Computerspiele, die durch ein für das jeweilige Spiel charakteristisches Bild symbolisiert werden. Die Bilder weisen eine unterschiedliche Größe auf. Beispielhaft ist mit 32 ein hervorgetretenes Objekt, das zu dem dargestellten Zeitpunkt am größten dargestellt ist, bezeichnet. Das mit 34 bezeichnete Objekt weist nur ungefähr ein Drittel der Größe des Objekts 32 auf und ist gerade zurückgetreten. Die weiteren beispielhaft ausgewählten Objekte 36 und 38 haben eine mittlere Größe. Das Objekt 36 befindet sich gerade im Hervortreten, während das Objekt 38 gerade zurücktritt.

Das Hervor- und Zurücktreten der dargestellten Objekte basiert auf einer errechneten Projektion der Objekte auf die Bildschirmfläche. In einem mathematischen Modell befinden sich die einzelnen Objekte dazu in einem bestimmten Abstand um einen gedachten Mittelpunkt innerhalb der Wolke und rotieren um diesen gedachten Mittelpunkt. Sämtliche dargestellten Objekte rotieren mit der gleichen Winkelgeschwindigkeit um diesen Mittelpunkt, sodass der Eindruck einer annähernd kugelförmigen Verteilung der Objekte und einer gemeinsamen Rotationsbewegung der Objekte auf dieser Kugelfläche entsteht.

Während des Zurücktretens eines Objekts, was im Beispiel einer Rotationsbewegung des Objekts auf die Rückseite der gedachten Kugel gleichkommt, ändert sich nicht nur die Größe, sondern auch die Farbigkeit des Objekts. So erscheinen die einzelnen Bilder mit zunehmender Entfernung vom Betrachter immer blasser und dunkler, bis sie sich nicht mehr vom Hintergrundbild unterscheiden lassen. Sie verschwinden somit für eine bestimmte Zeit, bis sie auf der anderen Seite der Kugel wieder langsam auftauchen und dabei an Größe und Farbigkeit gewinnen. Der Abstand jedes einzelnen Bilds von dem gedachten Mittelpunkt variiert in Abhängigkeit von der Bewertung, die das repräsentierte Computerspiel erhalten hat. Besonders hoch bewertete Spiele erscheinen deshalb während des Hervortretens bzw. im vollständig hervorgetretenen Zustand besonders hervorgehoben.

Die Rotationsbewegung der Objekte um den gedachten Mittelpunkt erfolgt mit einer Geschwindigkeit, die dem Benutzer ein einfaches Verfolgen einzelner Objekte während der Rotationsbewegung erlaubt. Weiterhin kann der Benutzer durch Bewegen eines Zeigers des Eingabegeräts über den mit der gestrichelten Linie 30 umschriebenen Bereich der Punktwolke Einfluß auf die Rotationsgeschwindigkeit und -richtung nehmen. Bewegt der Benutzer den Zeiger der Maus oder eines sonstigen Eingabegeräts in den zentralen Bereich eines der dargestellten Objekte, wird die Rotationsbewegung angehalten, das unter dem Zeiger befindliche Objekt vergrößert dargestellt und in einem neben dem Objekt angeordneten Textfeld eine Zusammenstellung von Zusatzinformationen zu dem von dem Objekt repräsentierten Spiel angeboten.

Der gesamte Vorrat von Objekten umfaßt im dargestellten Beispiel mehrere Tausend Computerspiele. Durch die Vorauswahlkritierien wird diese Vielzahl auf eine Teilmenge von ungefähr 40 Spielen reduziert, die auf dem Bildschirm dargestellt werden.

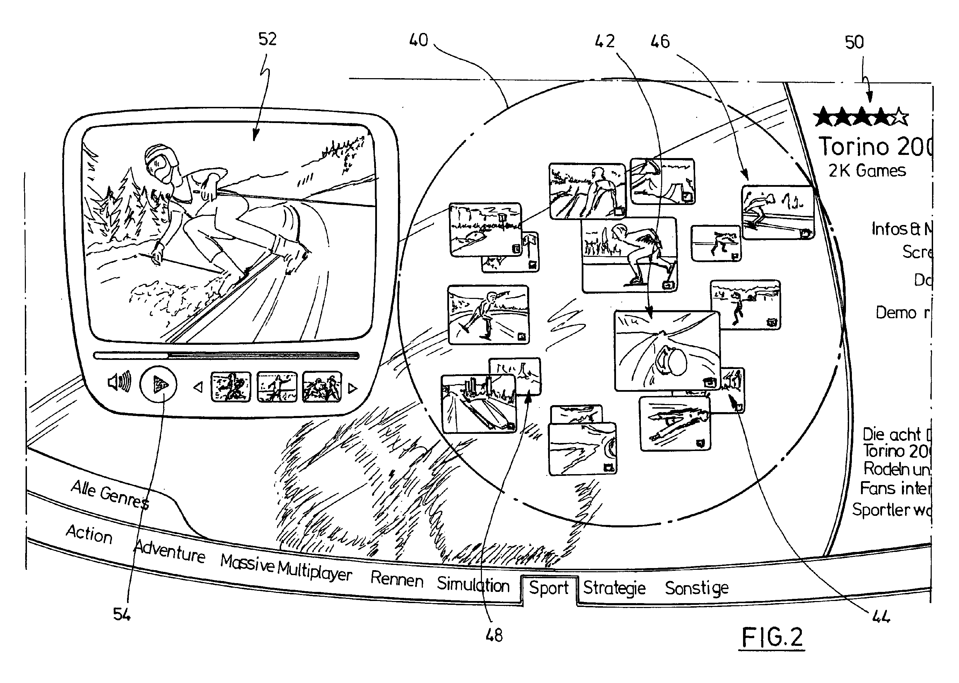

Hat der Benutzer ein bestimmtes der innerhalb der Wolke dargestellten Spiele mit dem Eingabegerät ausgewählt, z.B. durch Anklicken, erscheint der in der Figur 2 dargestellte Bildschirminhalt. Dabei entspricht der von der gestrichelten Linie 40 umrandete Bereich dem Bereich 30 aus der Figur 1, in dem zuvor die auswählbaren Objekte dargestellt waren. Nach Auswahl eines Objekts befinden sich in diesem Bereich nun jedoch nicht mehr auswählbare Objekte, sondern weitere Bilder, die zusätzliche Informationen und Eindrücke von dem ausgewählten Spiel vermitteln. Im Beispiel handelt es sich insbesondere um Bilder, die bestimmte Bildschirminhalte des Computerspiels zeigen.

Besonders bemerkenswert an der Darstellung dieser Bilder ist, dass sie in der gleichen Form erfolgt wie die Darstellung der auswählbaren Objekte in Figur 1. Insbesondere haben die dargestellten Bilder eine variierende Größe und Farbigkeit und treten kontinuierlich hervor und zurück. Beispielhaft sind ein hervorgetretenes Bild 42, ein zurückgetretenes Bild 44, ein hervortretendes Bild 46 und ein zurücktretendes Bild 48 gekennzeichnet. Die Bilder rotieren wiederum mit einer gleichmäßigen Winkelgeschwindigkeit um einen gedachten Mittelpunkt und sind als Projektion auf die Bildschirmfläche dargestellt. Ergänzend befindet sich im rechten Randbereich 50 des Bildschirms ein Textfeld, in dem zusätzliche Informationen zu dem ausgewählten Computerspiel zusammengestellt sind. Dazu zählt insbesondere der Titel, der Hersteller, eine Bewertung und ein Kaufpreis des Spiels.

Schließlich ist im linken oberen Bereich des dargestellten Bildschirmausschnitts ein Bildschirm 52 dargestellt, auf dem ein gegebenenfalls mit Musik hinterlegtes Video zu dem ausgewählten Spiel abgespielt werden kann. Gestartet werden kann das Video vom Benutzer mit Hilfe eines Startknopfs 54. Insgesamt erhält der Benutzer durch den in Figur 2 dargestellten Bildschirminhalt eine umfassende und anregend präsentierte Auswahl von Zusatzinformationen zu dem ausgewählten Spiel.

## Patentansprüche

1. Verfahren zur Auswahl eines Objekts aus einem Vorrat von Objekten, mit einer ein Eingabegerät und einen Bildschirm aufweisenden Benutzerschnittstelle, mit den folgenden Schritten:
• Vorgeben eines Werts für mindestens ein Vorauswahlkriterium,
• Bilden einer Teilmenge von Objekten aus dem Vorrat von Objekten nach Maßgabe des vorgegebenen Werts für das Vorauswahlkriterium,
• Darstellen von Objekten aus der Teilmenge auf dem Bildschirm und
• Auswählen eines dargestellten Objekts mit dem Eingabegerät,
**dadurch gekennzeichnet, dass** beim Darstellen der Objekte aus der Teilmenge einzelne dargestellte Objekte kontinuierlich hervor- und zurücktreten.

2. Verfahren nach Anspruch 1, **dadurch gekennzeichnet, dass** die dargestellten Objekte Bilder, Symbole oder Piktogramme sind, die eine Kaufsache oder einen digitalen Inhalt, insbesondere ein digitales Medium, repräsentieren.

3. Verfahren nach Anspruch 1 oder 2, **dadurch gekennzeichnet, dass** hervorgetretene Objekte größer dargestellt werden als zurückgetretene Objekte.

4. Verfahren nach einem der Ansprüche 1 bis 3, **dadurch gekennzeichnet, dass** hervorgetretene Objekte in anderen Farben und/oder anderer Helligkeit dargestellt werden als zurückgetretene Objekte, insbesondere derart, dass hervorgetretene Objekte farbig und zurückgetretene Objekte schwarzweiß dargestellt werden.

5. Verfahren nach einem der Ansprüche 1 bis 4, **dadurch gekennzeichnet, dass** die zurückgetretenen Objekte zeitweise nicht sichtbar sind.

6. Verfahren nach einem der Ansprüche 1 bis 5, **dadurch gekennzeichnet, dass** die Anordnung der dargestellten Objekte auf dem Bildschirm in Form einer auf einen Bereich des Bildschirms beschränkten Wolke erfolgt, in der die dargestellten Objekte scheinbar zufällig verteilt sind.

7. Verfahren nach einem der Ansprüche 1 bis 6, **dadurch gekennzeichnet, dass** die dargestellten Objekte in einem Abstand um einen gedachten Mittelpunkt rotieren und als Projektion auf die Bildschirmfläche dargestellt werden, wobei weiter vom Betrachter entfernte Objekte kleiner als näher am Betrachter befindliche Objekte dargestellt werden.

8. Verfahren nach Anspruch 7, **dadurch gekennzeichnet, dass** das Rotieren aller dargestellten Objekte mit der gleichen Winkelgeschwindigkeit erfolgt.

9. Verfahren nach Anspruch 7 oder 8, **dadurch gekennzeichnet, dass** die dargestellten Objekte einen annähernd gleichen Abstand von dem gedachten Mittelpunkt aufweisen, so dass die Objekte auf einer Kugelfläche oder auf einer geometrisch verzerrten Kugelfläche angeordnet sind.

10. Verfahren nach einem der Ansprüche 7 bis 9, **dadurch gekennzeichnet, dass** eine Eigenschaft eines Objekts die Darstellung des Objekts, insbesondere dessen Abstand von dem gedachten Mittelpunkt, bestimmt.

11. Verfahren nach einem der Ansprüche 7 bis 10, **dadurch gekennzeichnet, dass** der Benutzer die Richtung und/oder Geschwindigkeit der Bewegung der Objekte mit dem Eingabegerät beeinflussen kann.

12. Verfahren nach einem der Ansprüche 1 bis 11, **dadurch gekennzeichnet, dass** das Vorgeben eines Vorauswahlkriteriums in der Wahl eines Genres, einer Altersfreigabe, eines Kaufpreises, einer Bewertung oder eines Erscheinungsdatums besteht.

13. Verfahren nach einem der Ansprüche 1 bis 12, **dadurch gekennzeichnet, dass** der Benutzer ein anzuwendendes Vorauswahlkriterium aus einer Liste mit vorgegebenen Vorauswahlkriterien auswählt.

14. Verfahren nach einem der Ansprüche 1 bis 13, **dadurch gekennzeichnet, dass** die Vorgabe eines Werts für ein Vorauswahlkriterium anhand eines kontinuierlich verstellbaren Reglers, der auf dem Bildschirm dargestellt ist, erfolgt, insbesondere anhand eines Schiebereglers oder eines Drehreglers.

15. Verfahren nach einem der Ansprüche 1 bis 14, **dadurch gekennzeichnet, dass** ein vorgegebener Wert für ein Vorauswahlkriterium von einem Benutzer fest vorgegeben werden kann und eine Verstellung des vorgegebenen Werts nur nach einer Authentifizierung des Benutzers möglich ist, insbesondere nach Eingabe eines Paßworts.

16. Verfahren nach einem der Ansprüche 1 bis 15, **dadurch gekennzeichnet, dass** das Bilden einer Teilmenge von Objekten aus dem Vorrat von Objekten und das Darstellen der Objekte aus der Teilmenge bei einer Veränderung der Vorauswahlkriterien dynamisch aktualisiert wird.

17. Verfahren nach einem der Ansprüche 1 bis 16, **dadurch gekennzeichnet, dass** eine zweite Teilmenge von Objekten gebildet wird, wenn die Anzahl der Objekte aus dem Vorrat von Objekten, die die Vorauswahlkriterien erfüllen, eine bevorzugte Anzahl von Objekten für eine Teilmenge übersteigt, und dass die Objekte der zweiten Teilmenge gesondert von den Objekten der ersten Teilmenge dargestellt werden können.

18. Verfahren nach einem der Ansprüche 1 bis 17, **dadurch gekennzeichnet, dass** nach Bewegen eines mit dem Eingabegerät gesteuerten Zeigers auf ein dargestelltes Objekt oder in dessen Nähe Informationen zu dem dargestellten Objekt angezeigt werden.

19. Verfahren nach einem der Ansprüche 1 bis 18, **dadurch gekennzeichnet, dass** nach dem Auswählen eines dargestellten Objekts mit dem Eingabegerät Informationen zu dem Objekt dargestellt werden.

20. Verfahren nach Anspruch 19, **dadurch gekennzeichnet, dass** die Darstellung der Informationen in der gleichen Form erfolgt, wie die Darstellung der Objekte aus der Teilmenge, wobei die Informationen insbesondere Bilder sind, die an die Stelle der Objekte aus der Teilmenge treten.

21. Verfahren nach Anspruch 19 oder 20, **dadurch gekennzeichnet, dass** die Darstellung der Informationen das Abspielen eines Videos umfasst.

22. Verfahren nach einem der Ansprüche 1 bis 21, **dadurch gekennzeichnet, dass** der Bildschirmhintergrund sich nach Maßgabe eines Vorauswahlkriteriums ändert, insbesondere durch Darstellung kontextabhängiger Hintergrundbilder.
